# EUROPEAN PATENT SPECIFICATION

(11) **EP 2 464 103 B1**
(45) Date of publication and mention of the grant of the patent: **27.02.2019**
(21) Application number: 11192649.9
(22) Date of filing: 08.12.2011
(51) Int. Cl.: H04N 21/433, H04N 21/44, H04N 21/4782, H04N 21/4788, H04N 21/482, H04N 21/81, H04N 21/84, H04N 5/44, H04N 5/445, H04N 7/14

(54) **Image processing apparatus and user terminal apparatus**
Bildverarbeitungsvorrichtung und Benutzerendgerätvorrichtung
Appareil de traitement d'images et appareil de terminal utilisateur

(30) Priority: 08.12.2010 KR 20100125051
(43) Date of publication of application: 13.06.2012
(73) Proprietor: Samsung Electronics Co., Ltd., Suwon-si, Gyeonggi-do, 443-742 (KR)
(72) Inventor: Cho, Bong-hyun, Gwangju-si (KR); Kim, Yoo-tai, Yongin-si (KR); Lee, Chang-soo, Seoul (KR); Lee, Sang-hee, Seoul (KR); Kim, Jong-seo, Seoul (KR); Yoon, Soo-yeoun, Seoul (KR); Shin, Jung-hoon, Hwaseong-si (KR); Yoon, Yeo-ri, Suwon-si (KR)
(74) Representative: Appleyard Lees IP LLP

(56) References cited:
- EP-A1- 1 783 998
- WO-A1-2006/064941
- US-A1- 2007 046 830
- US-B1- 6 658 662

## Description

### BACKGROUND OF THE INVENTION

### 1. Field

Apparatuses and methods consistent with the exemplary embodiments relate to an image forming apparatus, a user terminal apparatus, an image processing method, and a control method thereof, and more particularly, to a user terminal apparatus capable of capturing an image, and an image processing method and a control method thereof.

### 2. Description of the Related Art

Recently, a television broadcast, particularly, a digital broadcast displays an Electronic Program Guide (EPG) on a screen to provide a user with data other than video and audio information and information regarding a broadcast program.

With the introduction of such digital broadcast, a television receiver has been developed to include more complicated and various functions to receive high-quality images.

A representative example of those functions is a capture function for capturing an image currently displayed on a screen.

A variety of information is provided through digital broadcast, and a user wishes to keep some of the information. Thus, the user uses the capture function to capture a desired image while watching the broadcast.

In order to use the screen capture function, a user presses a 'screen capture' button on a remote controller while watching broadcast or video on a television so that a still image of a current screen may be displayed on a full screen or as a picture-in-picture (PIP) image, allowing the user to view a still image of broadcast or video at a specific time point. If the user presses a 'cancel' button, the screen returns to the original state displaying the original broadcast or video again.

US6658662 discloses a system capturing a video frame from which a list of URLs are extracted in order to allow the user to access them.

However, there is a time difference between a point when the 'screen capture' button is pressed and a point when a signal of the remote controller is transmitted to a television to compose a specific frame of video as a still image, making it difficult for a user to obtain a still image of a desired point.

### SUMMARY

One or more exemplary embodiments provide an image processing apparatus which captures a plurality of image frames, a user terminal apparatus, an image processing method, and a control method thereof.

According to the present invention there is provided an apparatus and method as set forth in the appended claims. Other features of the invention will be apparent from the dependent claims, and the description which follows.

According to an aspect of an exemplary embodiment, there is provided an image processing apparatus. The image processing apparatus may include an image processing unit which processes an image signal, a display unit which displays the processed image, a user interface unit which receives a user command to capture an image, a screen capture unit which captures an image frame according to the user command, a storage unit which stores the image frame captured by the screen capture unit, and a control unit which controls the screen capture unit to capture a plurality of image frames including the image frame corresponding to a point of time when the user command is input.

The plurality of image frames may include a predetermined number of frames before and after the image frame corresponding to the point of time when the user command is input.

The control unit may control to display the plurality of captured image frames on one portion of a display screen, and the user interface unit may receive a user command to select at least one image frame from among the plurality of displayed image frames.

The apparatus may further include an image analyzing unit which analyzes the at least one image frame selected by the user interface unit and extracts image information and a service mapping unit which searches a connectable service according to characteristics of the extracted image information and connects to the searched connectable service.

The image analyzing unit may extract the image information using optical character recognition (OCR).

The control unit may control to display the extracted image information in a form of a service button and connect to a corresponding service if the service button is selected according to a user command.

The service may include at least one of a service of the image processing apparatus, an internet cloud service and a mobile phone providing service.

The image information may include at least one of a telephone number, internet address, website name, text, date, place name, product name, and person's name.

According to an aspect of another exemplary embodiment, there is provided a user terminal apparatus. The user terminal apparatus may include a communication interface unit which communicates with an external image processing apparatus, a display unit which displays a plurality of captured image frames received from the image processing apparatus, a user interface unit which receives a user command to select at least one image frame from among the plurality of displayed image frames, and a control unit which controls the communication interface unit to transmit the user command to select the at least one image frame to the image processing apparatus, and the plurality of image frames may include an image frame corresponding to a point of time when a user command to capture an image is input and a predetermined number of frames before and after the image frame in the image processing apparatus.

The control unit may control the communication interface unit to transmit a user command to select an on-screen display (OSD) menu displayed on the selected at least one image frame to the image processing apparatus, and the OSD menu may be mapped to a service corresponding to characteristics of extracted image information which is extracted by analyzing the selected image frame.

According to an aspect of another exemplary embodiment, there is provided a method for processing an image with an image processing apparatus. The method for processing an image may include displaying an image signal, receiving a user command to capture an image, capturing a plurality of image frames including an image frame corresponding to a point of time when the user command is input, and storing the plurality of captured image frames.

The plurality of image frames may include a predetermined number of frames before and after the image frame corresponding to the point of time when the user command is input.

The method may further include displaying the plurality of captured image frames on one portion of a display screen and receiving a user command to select at least one image frame from among the plurality of displayed image frames.

The method may further include analyzing the selected at least one image frame and extracting image information, searching a connectable service according to characteristics of the extracted image information, and connecting to the searched connectable service.

The analyzing may include extracting the image information using optical character recognition (OCR).

The method may further include displaying the extracted image information in a form of an OSD in a location where the image information was displayed in the selected at least one image frame and connecting to a corresponding service if the OSD menu is selected according to a user command.

The service may include at least one of a service of the image processing apparatus, an internet cloud service and a mobile phone providing service.

According to an aspect of another exemplary embodiment, there is provided a method for controlling a user terminal apparatus communicable with an external image processing apparatus. The method for controlling a user terminal apparatus communicable with an external image processing apparatus may include displaying a plurality of captured image frames received from the image processing apparatus, receiving a user command to select at least one image frame from among the plurality of displayed image frames, and transmitting a user command to select the at least one image frame to the image processing unit, and the plurality of image frames may include an image frame corresponding to a point of time when a user command to capture an image is input and a predetermined number of frames before and after the image frame in the image processing apparatus.

The method may further include receiving a user command to select an OSD menu displayed on the selected at least one image frame and transmitting a user command to select the OSD menu to the image processing unit, and the OSD menu may be mapped to a service corresponding to characteristics of image information which is extracted by analyzing the selected image frame.

### BRIEF DESCRIPTION OF THE DRAWINGS

The above and/or other aspects will be more apparent and more readily appreciated from the following description of the exemplary embodiments, taken in conjunction with the accompanying drawings, in which:
FIGS. 1A and 1B are block diagrams illustrating configurations of an image processing apparatus according to various exemplary embodiments;
FIG. 2 is a block diagram illustrating configuration of a user terminal apparatus according to another exemplary embodiment;
FIG. 3 is a view to explain an image capturing method according to an exemplary embodiment;
FIGS. 4A and 4B are views to explain a service providing method according to an exemplary embodiment;
FIGS. 5A and 5B are views to explain a service providing method according to various exemplary embodiments;
FIG. 6 is a flowchart of an image processing method according to an exemplary embodiment;
FIG. 7 is a flowchart of an image processing method according to another exemplary embodiment; and
FIG. 8 is a sequence view of an image processing method according to another exemplary embodiment.

### DETAILED DESCRIPTION

Hereinafter, the present inventive concept will be described in detail with reference to the accompanying drawings, in which one of more exemplary embodiments of the invention are shown, so as to be easily realized by a person having ordinary knowledge in the art. The exemplary embodiments may be embodied in various forms without being limited to the exemplary embodiments set forth herein; rather, these exemplary embodiments are provided so that this disclosure will be thorough and complete, and will fully convey the inventive concept to those of ordinary skill in the art.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Descriptions of well-known functions or constructions are are omitted for clarity.

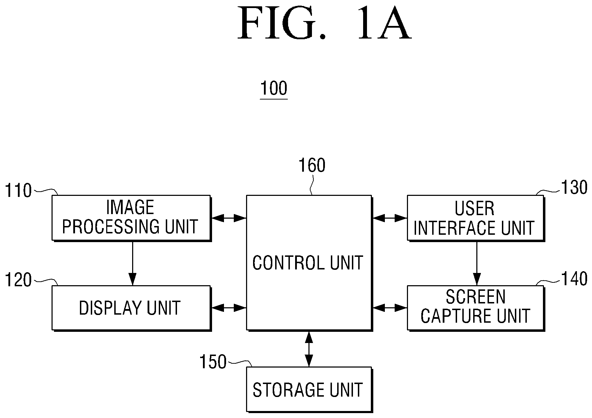

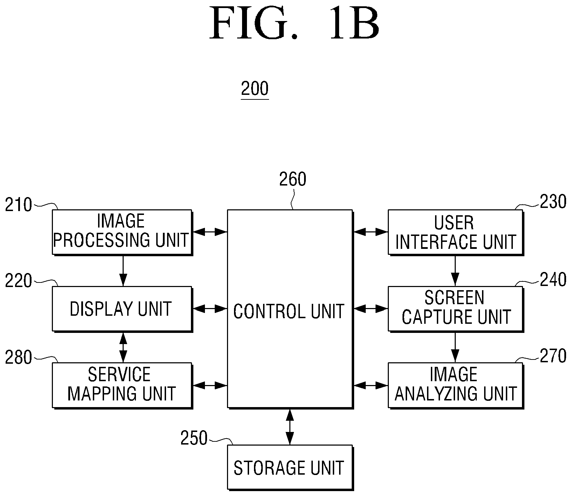

FIGS. 1A and 1B are block diagrams illustrating configurations of an image processing apparatus according to various exemplary embodiments.

Referring to FIG. 1A, the image processing apparatus 100 according to an exemplary embodiment comprises an image processing unit 110, a display unit 120, a user interface unit 130, a screen capture unit 140, a storage unit 150, and a control unit 160.

The image processing apparatus 100 may be embodied in various forms. For example, the image processing apparatus 100 may be embodied as for example, but not limited to, mobile terminal apparatuses such as a mobile phone, a smart phone, a notebook computer, a digital broadcast terminal apparatus, a Personal Digital Assistants (PDA), a Portable Multimedia Player (PMP), and a navigator, and a fixed terminal apparatuses such as, but not limited to, a digital television and a desktop computer. However, the image processing apparatus 100 will be assumed to be a digital television for convenience of explanation.

The image processing unit 110 processes a received or pre-stored image signal.

The image processing unit 110 may perform image-processing such as, but not limited to, de-multiplexing, decoding, and scaling.

In addition, albeit not illustrated in the drawing, the image processing unit 110 may further include an image receiving unit (not shown) which receives and demodulates an image signal.

The display unit 120 displays an image frame processed by the image processing unit 110. In addition, the display unit 120 may display various data objects generated by the image processing apparatus 100. Herein, the display unit 120 may be embodied as at least one of a liquid crystal display, a thin film transistor-liquid crystal display, an organic light-emitting diode, a flexible display, and three-dimensional display. In addition, there may be more than two display units 120 according to exemplary embodiment configurations of the image processing apparatus 100. For example, if the image processing apparatus 100 provides a PIP function, a display for a main image and a display for a PIP image may be provided.

The display unit 120 may be embodied as a touch screen forming layers with a touch pad. In this case, the display unit 120 may be used as the user interface unit 130 in addition to being used as an output apparatus. The user interface unit 130 will be explained later. In addition, the touch screen may be configured to detect not only a location and a size but also a pressure where a touch is input.

The display unit 120 may display a plurality of image frames captured by the screen capture unit 140 which will be explained in greater detail later along with the control unit 160.

The user interface unit 130 receives and analyses a user command input from a user through an input apparatus such as, but not limited to, a one-way remote controller, a two-way remote controller, a mouse, and a touch screen.

The user interface unit 130 receives a user command to capture an image frame.

In addition, the user interface unit 130 receives various user commands to control the operation of the image processing apparatus 100, and may be embodied as, for example but not limited to, a key pad, a dome switch, a touch pad (electrostatic/capacitive), a jog wheel, or a jog switch. If a touch pad forms layers with the display unit 120 which will be explained later, this may be called a touch screen.

The screen capture unit 140 captures a still image according to a user command. In this case, a user may designate a desired size of an image to be captured and determine a number of screens to be captured according to capacity of a usable memory and a transmission environment. In addition, a method for storing and transmitting data may be set, and a format of storing an image may also be set if various image formats are supported.

The storage unit 150 stores an image frame captured by the screen capture unit 140.

The display unit may display a plurality of image frames captured by the screen capture unit 140 which will be explained in greater detail later along with the control unit 160.

The control unit 160 controls overall operations of the image processing apparatus 100.

The control unit 160 controls the screen capture unit 140 to capture a plurality of image frames including an image frame corresponding to a point of time when a user command is input. Herein, the plurality of image frames may include a predetermined number of frames before and after an image frame corresponding to a point of time when a user command is input. That is, the control unit 160 may control to perform buffering on a frame already displayed on a screen while a video was reproduced for a predetermined time.

The interval and the number of frames to be captured, before and after an image frame corresponding to a point of time when a user command is input, may be set in various ways according to capacity and conditions of an image processing apparatus.

In addition, the control unit 160 may control to display a plurality of captured image frames on one portion of a display screen in a list. In this case, a list may be searched using a control apparatus such as a remote controller.

For example, the control unit 160 may display a plurality of captured image frames by overlaying the frames on a predetermined position of an image screen which is being output. Alternatively, a plurality of captured image frames may be displayed in a PIP screen. That is, the screen capture unit 140 may display a plurality of captured image frames on a main screen and a sub screen of the display unit 120 as panoramic images. Herein, PIP represents a television screen which provides a main screen and a sub screen simultaneously. In a television providing such a PIP screen, a background screen is referred to as a parent screen and a small screen is referred to as a PIP screen. Using the PIP function, a user may watch one channel while watching another channel at the same time.

Accordingly, the control unit 160 may control to display images captured by the screen capture unit 140 on a main screen as panoramic images and display an image currently being received on a sub screen at the same time, or vice versa. Accordingly, a user may watch an image currently being received on a television while a capture function is being formed.

In this case, the user interface unit 130 may receive a user command to select at least one image frame from among a plurality of displayed image frames.

FIG. 1B is a block diagram illustrating configuration of an image processing apparatus according to another exemplary embodiment.

Referring to FIG. 1B, the image processing apparatus 200 according to another exemplary embodiment comprises an image processing unit 210, a display unit 220, a user interface unit 230, a screen capture unit 240, a storage unit 250, a control unit 260, an image analyzing unit 270, and a service mapping unit 280.

The detailed descriptions regarding components in FIG. 1B which are overlapped with those in FIG. 1A will not be provided.

The image processing unit 210 processes a received or pre-stored image signal.

The display unit 220 displays an image processed by the image processing unit 210.

The display unit 120 may display a plurality of images captured by the screen capture unit 240 which will be explained later.

In addition, the display unit 220 displays and outputs information processed by the image processing apparatus 200. For example, if the image processing apparatus 200 is embodied as a mobile terminal, a User Interface (UI) or a Graphic User Interface (GUI) may display information regarding a telephone call when the mobile terminal is in a telephonic communication mode. If the image processing apparatus is in a video call mode or a photographing mode, a photographed and/or received image, a UI, or a GUI may be displayed.

The user interface unit 230 receives a user command to capture an image.

The screen capture unit 240 captures an image frame according to a user command.

The storage unit 250 stores an image frame captured by the screen capture unit 250.

The control unit 260 controls overall operations of the image processing apparatus 200.

The control unit 260 controls the screen capture unit 240 to capture a plurality of image frames including an image frame corresponding to a point of time when a user command is input. The plurality of image frames may include a predetermined number of frames before and after an image frame corresponding to a point of time when a user command is input.

In addition, the control unit 260 may control to display a plurality of captured image frames on one portion of a display screen.

In this case, the user interface unit 230 may receive a user command to select at least one image frame from among a plurality of displayed image frames.

The image analyzing unit 270 analyzes an image frame selected through the user interface unit 230 and extracts image information.

The image analyzing unit 270 may extract image information using Optical Character Recognition (OCR). Herein, the image information may be information such as available text, numbers, and graphics, and may be provided in various forms such as, but not limited to, a telephone number, an internet address, a website, a name of product, a name of person, and a date. Alternatively, the image information may be provided in the form of an image including metadata. In this case, a search service may be provided using the metadata included in the image.

In addition, the control unit 260 may control to display image information extracted from the image analyzing unit 270 as an OSD menu, a service button, or a search window (hereinafter, referred to as an OSD menu for convenience of explanation) and connect to a corresponding service if an OSD menu is selected according to a user command. The control unit 260 may display a corresponding OSD menu on a location of an original still image where image information extracted from the image analyzing unit 270 is displayed.

The service mapping unit 280 searches a connectable service using image information extracted from the image analyzing unit 270 and connects to the searched connectable service. The connectable service may differ according to the type of image information and may be built in the form of a service mapping database. That is, the connectable service may be configured in the image processing apparatus 200 or in an external data server which can be connected through a network.

The service may include, for example but not limited to, at least one of a service of the image processing apparatus 200, an internet cloud service, and a mobile phone providing service.

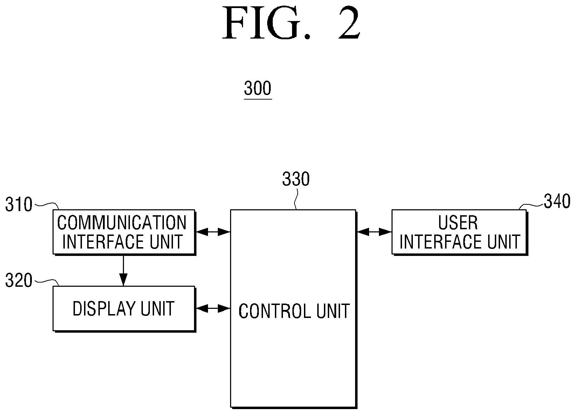

FIG. 2 is a block diagram illustrating configuration of a user terminal apparatus according to another exemplary embodiment.

Referring to FIG. 2, the user terminal apparatus 300 comprises a communication interface unit 310, a display unit 320, a control unit 330, and a user interface unit 340.

The user terminal apparatus 300 may be embodied as a touch remote controller which is capable of performing two-way communication (for example but not limited to, using a network communication network such as WiFi and 3G) with an external image processing apparatus (not shown). For example, the user terminal apparatus 300 may be embodied as a smart touch pad.

The communication interface unit 310 performs communication with an external image processing apparatus. The external image processing apparatus may be configured to provide a plurality of image frames including a predetermined number of frames before and after an image frame corresponding to a point of time when a user command to capture an image is input to the user terminal apparatus 300.

The display unit 320 may display a plurality of captured image frames received from an external image processing apparatus.

The control unit 330 controls overall operations of the user terminal apparatus 300. The control unit 330 may control to display a plurality of image frames received through the communication interface unit 310 on one portion of a display screen. The plurality of image frames may include a predetermined number of frames before and after an image frame corresponding to a point of time when a user command is input to capture an image.

The user interface unit 340 receives a user command to select at least one image frame from among a plurality of displayed image frames.

In this case, the control unit 340 may control to transmit a user command to select at least one image frame from among a plurality of displayed image frames to an external image processing apparatus through the communication interface unit 310.

Accordingly, an image processing apparatus may analyze a selected still image and provide a service regarding extracted image information.

In the above exemplary embodiment, the user interface unit 340 and the display unit 320 are provided as a separate component, but this is only an example. As a further example, the display unit 320 may be embodied as a touch screen forming layers with a touch pad and perform a function of the user interface unit 340.

As a capture image list is displayed in a separate user terminal apparatus 300, the capture image list may not block a television screen and thus, a user may watch a television screen without any interference. In addition, a user may select an image frame or execute a service through a simple touch operation.

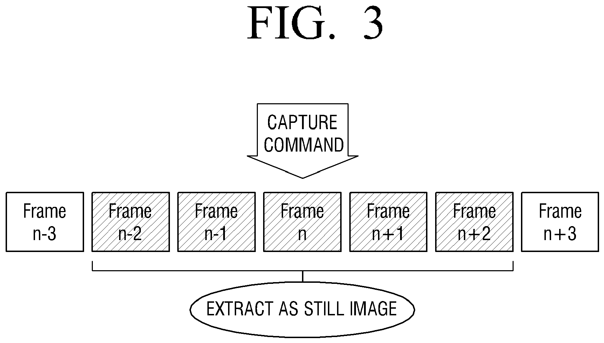

FIG. 3 is a view to explain an image capturing method according to an exemplary embodiment.

Referring to FIG. 3, if a user command to capture a still image frame is input, a plurality of image frames including an image frame corresponding to a point of time when the user command is input and a predetermined number of image frames before the image frame (frame n-1, frame n-2) and after the image frame (frame n+1, frame n+2) may be captured.

Accordingly, even if a point of time when an image frame is captured is somewhat slow or fast, a user may select a desired point of time more accurately.

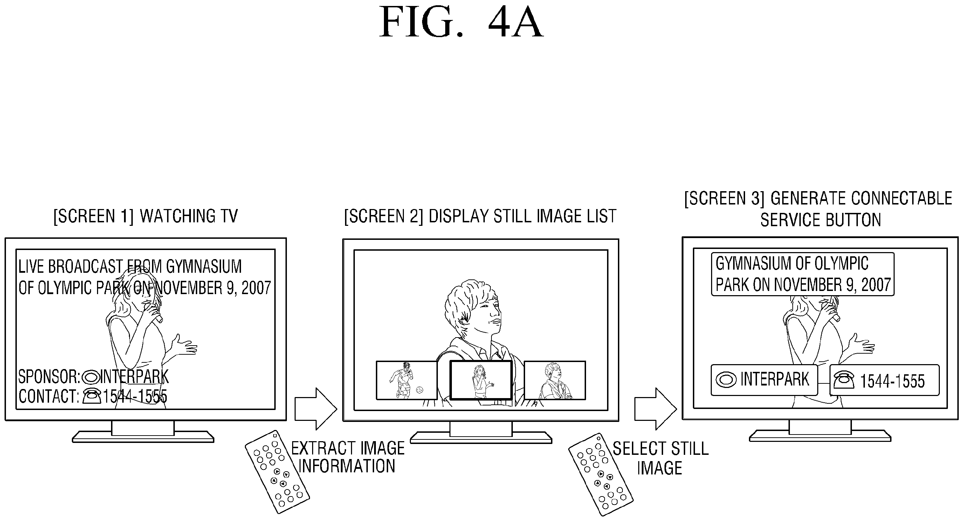

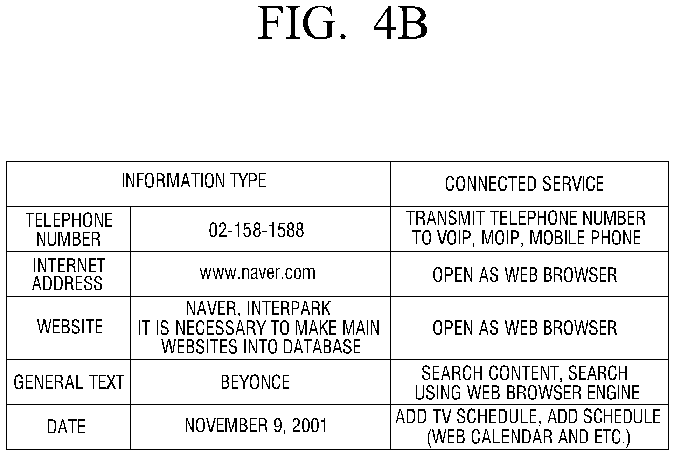

FIGS. 4A and 4B are views to explain a service providing method according to an exemplary embodiment.

Referring to FIG. 4A, if a capture command to capture an image is input while a user is watching a television, a plurality of image frames including a still image frame corresponding to a point of time when the capture command is input and image frames before and after the still image frame may be captured.

Subsequently, a still image list including the captured still image frame may be displayed on a screen.

If a user selects one still image frame in the displayed still image list, available image information may be extracted from the still image frame. The image information may be information such as available text, numbers, and graphics, and may be provided in various forms such as, but not limited to, a telephone number, an internet address, a website, a name of product, a name of person, and a date.

In this case, the extracted available image information may be displayed in the form of a service button or a search window. Herein, the search window may be generated and displayed in the form of an OSD menu.

For example, a service button corresponding to information from each image may be displayed where original image information was displayed as illustrated in FIG. 4A. Accordingly, an intuitive search service may be provided.

Subsequently, if a user selects a desired service button, a corresponding service may be connected. For example, if a user selects a service button which displays a telephone number, a telephone call may be made to a corresponding telephone number through a connected mobile phone. Alternatively, if a user selects a service button which displays an internet site, a corresponding internet site may be searched and connected.

That is, a service corresponding to characteristics of extracted image information may be provided.

Referring to FIG. 4B, image information which can be extracted from a still image frame and the type of service thereof may be displayed.

As illustrated in FIG. 4B, image information may include a telephone number, an internet address, a website, a general text, and a date. In this case, addresses of main websites may be made into database and managed.

In the case of a telephone number, the services provided in association with information of each image may include transmitting a telephone number to voice over internet protocol (VoIP), mobile communications over internet protocol (MoIP), or a mobile phone.

In the case of an internet address or a website address, a service of opening as a web browser may be provided.

In the case of a general text, a service of searching with a web browser search engine may be provided.

In the case of a date, a service of adding a television schedule or adding a schedule to a web calendar may be provided.

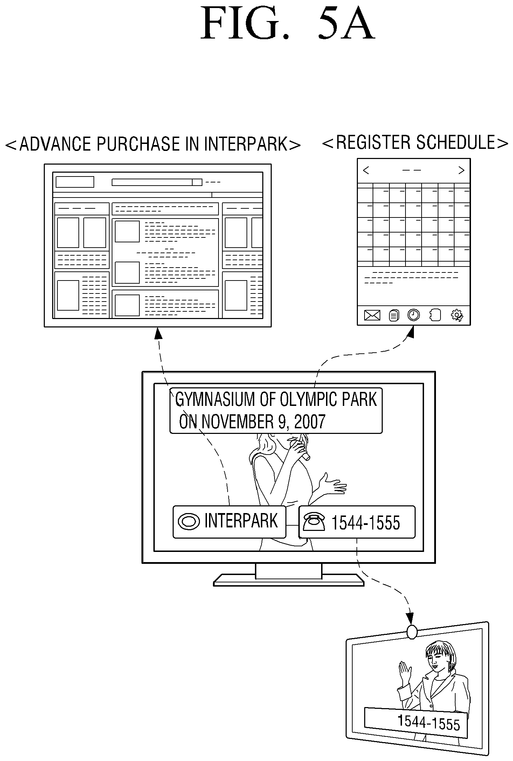

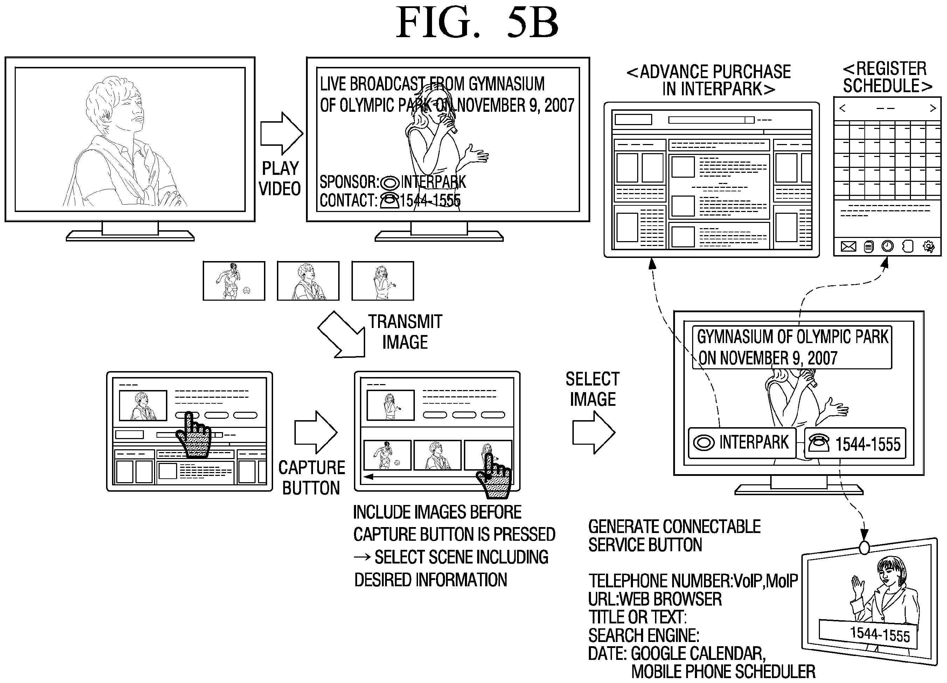

FIGS. 5A and 5B are views to explain a service providing method according to various exemplary embodiments.

Referring to FIG. 5A, available image information is extracted and displayed in the form of a service button, and a service connected to each image information is displayed.

As illustrated in FIG. 5A, a service for each image information may be determined and provided according to characteristics of each of the displayed image information.

For example, if image information is a website name, a corresponding website may be connected via internet. In this case, a corresponding website may be connected through a separate terminal such as a corresponding image processing apparatus having internet connection or a mobile phone connected to an image processing apparatus.

If image information is a predetermined schedule, a service of adding the corresponding schedule to a television schedule or a connected web calendar may be provided.

If image information is a telephone number, a corresponding telephone number may be connected through a separate terminal such as a corresponding image processing apparatus providing a communication service or a mobile phone connected to an image processing apparatus.

As illustrated in FIG. 5B, if a control apparatus controlling an image processing apparatus is embodied as a touch-type remote controller capable of two-way communication, the control apparatus may perform at least one of selecting a still image and providing a service.

Referring to FIG. 5B, if a capture command to capture an image is input while a user is watching a television, a plurality of image frames including a still image frame corresponding to a point of time when the capture command is input and image frames before and after the still image frame may be captured.

Subsequently, a still image list including the captured still image frame may be displayed on a screen of a two-way remote controller. Accordingly, the user may select a desired still image frame without any interference while watching a television.

Once the user selects a desired still image frame, the corresponding image may be displayed on an image processing apparatus or a screen of a two-way remote controller, or a service connected to selected image information may be provided to a corresponding apparatus.

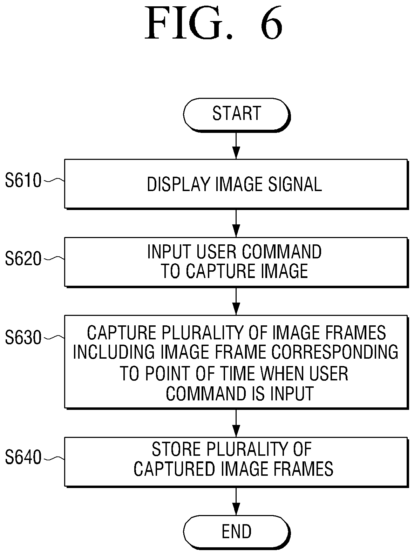

FIG. 6 is a flowchart of an image processing method according to an exemplary embodiment.

According to the image processing method illustrated in FIG. 6, an image signal is displayed (S610), and a user command to capture a still image frame is input (S620).

Subsequently, a plurality of image frames including an image frame corresponding to a point of time when a user command is input are captured (S630).

The plurality of captured image frames are stored (S640).

Herein, the plurality of image frames may include a predetermined number of frames before and after an image frame corresponding to a point of time when a user command is input.

In addition, a user command to display the plurality of captured image frames on one portion of a display screen and select at least one image frame from among the plurality of displayed image frames may be input.

A selected image frame may be analyzed and thus, image information may be extracted. A connectable service according to characteristics of the extracted image information may be searched. Accordingly, the searched connectable service may be connected.

In this case, image information may be extracted using Optical Character Recognition (OCR).

In addition, extracted image information may be displayed in the form of a search window, respectively, and if at least one of displayed search windows is selected according to a user command, a corresponding service may be connected or a search service may be provided. In this case, a search window may display the extracted image information on a location where an original still image frame was displayed.

The image information may include at least one of a telephone number, an internet address, a name of website, a text, a date, a name of place, a name of product, and a name of person.

In addition, the service may include at least one of a service of an image processing apparatus, an internet cloud service, and a mobile phone providing service.

The method for controlling a user terminal apparatus which communicates with an external image processing apparatus according to an exemplary embodiment includes displaying a plurality of captured image frames received from an external image processing apparatus and receiving a user command to select at least one image frame from among the plurality of displayed image frames. The plurality of image frames may include an image frame corresponding to a point of time when a user command to capture an image is input in an image processing apparatus and a predetermined number of frames before and after the image frame.

In addition, a user command to select at least one image frame may be transmitted to the image processing apparatus.

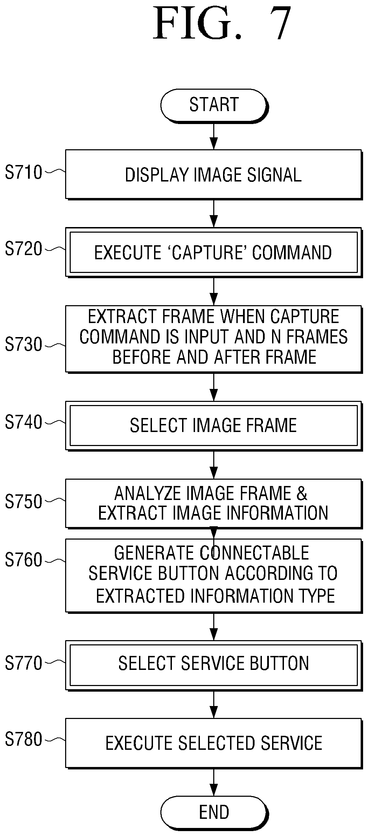

FIG. 7 is a flowchart of an image processing method according to another exemplary embodiment.

FIG. 7 illustrates an example in which a user terminal apparatus controlling an image processing apparatus is embodied as a one-way remote controller.

According to the image processing method illustrated in FIG. 7, an image signal may be displayed on an image processing apparatus (S710), and a capture command may be executed through a remote controller (S720).

Subsequently, n frames before and after a frame corresponding to a point of time when the capture command is input may be captured and displayed (S730).

An image frame may be selected through a remote controller (S740), the selected image frame may be analyzed in an image processing apparatus, and available image information may be extracted (S750).

Subsequently, a service button for providing a connectable service or search may be generated according to the type (or characteristics) of extracted image information (S760).

Then, a service button may be selected through a remote controller (S770), and a service or search corresponding to the selected service button may be executed (S780).

An operation of an image processing apparatus is displayed in a one-line box and an operation of a remote controller is displayed in a two-line box to separate a subject in each step.

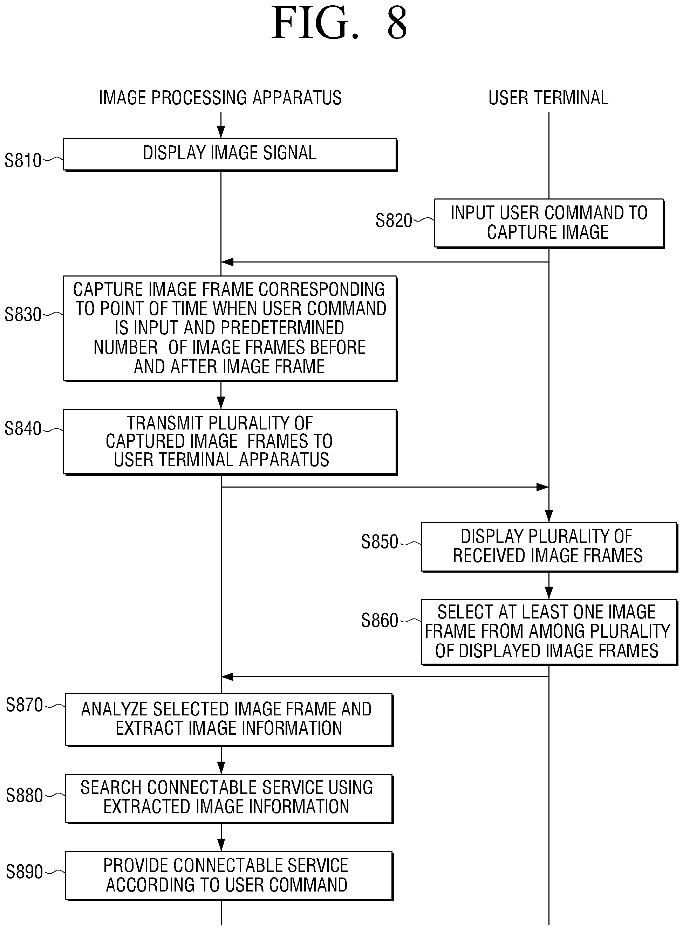

FIG. 8 is a sequence view of an image processing method according to another exemplary embodiment.

FIG. 8 illustrates an example in which a user terminal apparatus controlling an image processing apparatus is embodied as a two-way touch remote controller.

According to the image processing method illustrated in FIG. 8, an image signal may be displayed on an image processing apparatus (S810), and a user command to capture an image is input from a user terminal apparatus (S820).

Subsequently, the image processing apparatus captures an image frame corresponding to a point of time when the user command to capture an image is input and a predetermined number of image frames before and after the image frame (S830).

The image processing apparatus transmits the plurality of captured image frames to the user terminal apparatus (S840).

The user terminal apparatus displays the plurality of received image frames (S850).

At least one image frame from among the plurality of displayed image frames may be selected according to a user command (S860).

In this case, the image processing apparatus extracts available image information by analyzing the selected image frame (S870). The extracted image information may be displayed in the form of a search window.

In addition, the image processing apparatus may search a connectable service using the extracted image information (S880) and link the searched service to a search window.

Subsequently, the connectable service may be provided according to a user command (S890).

The image processing apparatus according to the exemplary embodiment may be applied to, for example but not limited to, a television, a VCR, a monitor, a television receiving personal computer, and a set-top box (STB), and may also be applied to an analog television, a digital television, and a satellite television. In addition, the image processing apparatus may be applied to all of NTSC, PAL, and SECAM methods. The image processing apparatus may be integrally installed in an image apparatus or may be installed outside of a television as a separate apparatus.

As a captured still image frame is analyzed, available information is extracted, and a relevant service is connected, usability of the still image frame may increase and a user may approach the relevant service more easily.

In addition, as a menu for a service connected to a location where available information is displayed, service connection (or information search) may be provided more intuitively.

Furthermore, as a still image frame is captured from a television screen, a user may select an image at a desired point of time. Therefore, the user does not have to experience inconvenience of capturing an image again or canceling a captured image as an image is captured at a wrong point of time.

Although a few embodiments of the present invention have been shown and described, it will be appreciated by those skilled in the art that changes may be made in these exemplary embodiments without departing from the principles of the invention, the scope of which is defined in the appended claims..

## Claims

1. An image processing apparatus, comprising:
an image processing unit which processes an image signal;
a display unit which displays the processed image;
a user interface unit which receives a user command to capture an image;
a screen capture unit which captures an image frame according to the user command;
a storage unit which stores the image frame captured by the screen capture unit;
a control unit which controls the screen capture unit to capture a plurality of image frames including the image frame corresponding to a point of time when the user command is input and including the image frames before and after said image frame;
an image analyzing unit which analyzes at least one image frame selected by the user interface unit and extracts image information,
wherein the control unit controls to display the plurality of captured image frames on one portion of a display screen and to connect to a service using the extracted image information,
wherein the user interface unit receives a user command to select the at least one image frame from among the plurality of displayed image frames.

2. The apparatus as claimed in claim 1, wherein the plurality of image frames include a predetermined number of frames before and after the image frame corresponding to the point of time when the user command is input.

3. The apparatus as claimed in claim 1 or 2, further comprising:
a service mapping unit which searches a connectable service according to characteristics of the extracted image information and connects to the searched connectable service.

4. The apparatus as claimed in any preceding claim, wherein the image analyzing unit extracts the image information using Optical Character Recognition (OCR).

5. The apparatus as claimed in claim 3 or 4, wherein the control unit controls to display the extracted image information in a form of an on-screen display (OSD) menu and to connect to a corresponding service if the OSD menu is selected according to a user command.

6. The apparatus as claimed in any preceding claim, wherein the control unit controls to display the OSD menu in a location where the image information was displayed in the selected image frame.

7. The apparatus as claimed in claim 5, wherein the service includes at least one of a service of the image processing apparatus, an internet cloud service and a mobile phone providing service.

8. The apparatus as claimed in any preceding claim, wherein the image information includes at least one of a telephone number, internet address, website name, text, date, place name, product name, and person's name.

9. A user terminal apparatus, comprising:
a communication interface unit which communicates with an external image processing apparatus;
means to input a user command to cause the image processing apparatus capture an image frame;
a display unit which displays a plurality of captured image frames received from the image processing apparatus;
a user interface unit which receives a user command to select at least one image frame from among the plurality of displayed image frames; and
a control unit which controls the communication interface unit to transmit the user command to select the at least one image frame to the image processing apparatus,
wherein the control unit controls the communication interface unit to transmit to the image processing apparatus a user command to connect to a service using the image information extracted by the image processing apparatus by analyzing the selected at least one image frame,
wherein the plurality of image frames includes an image frame corresponding to a point of time when a user command to capture an image is input and a predetermined number of image frames before and after the image frame in the image processing apparatus.

10. The apparatus as claimed in claim 9, wherein the control unit controls the communication interface unit to transmit a user command to select an OSD menu displayed on the selected image frame to the image processing apparatus,
wherein the OSD menu is mapped to a service corresponding to characteristics of extracted at least one image information which is extracted by analyzing the selected image frame.

11. A method for processing an image with an image processing apparatus, the method comprising:
displaying an image signal;
receiving a user command to capture an image;
capturing a plurality of image frames including an image frame corresponding to a point of time when the user command is input, and including image frames before and after said image frame;
storing the plurality of captured image frames;
displaying the plurality of captured image frames on one portion of a display screen; and
receiving a user command to select at least one image frame from among the plurality of displayed image frames,
analyzing the selected at least one image frame and extracting image information, and connecting to a service using the extracted image information.

12. The method as claimed in claim 11, wherein the plurality of image frames include a predetermined number of frames before and after the image frame corresponding to the point of time when the user command is input.

13. A method for controlling a user terminal apparatus communicable with an external image processing apparatus, the method comprising inputting at the user terminal a user command to cause the image processing apparatus capture an image frame;
displaying at the user terminal apparatus a plurality of captured image frames received from the image processing apparatus;
receiving a user command to select at least one image frame from among the plurality of displayed image frames;
transmitting the user command to select the at least one image frame to the image processing apparatus; and
transmitting a user command to the image processing apparatus to connect to a service using an image information extracted by the image processing apparatus by analyzing the selected at least one image frame,
wherein the plurality of image frames include an image frame corresponding to a point of time when a user command to capture an image is input and a predetermined number of frames before and after the image frame in the image processing apparatus.

## Patentansprüche

1. Bildverarbeitungsvorrichtung, umfassend:
eine Bildverarbeitungseinheit, die ein Bildsignal verarbeitet;
eine Anzeigeeinheit, die das verarbeitete Bild anzeigt;
eine Benutzerschnittstelleneinheit, die einen Benutzerbefehl zum Erfassen eines Bildes empfängt;
eine Bildschirmerfassungseinheit, die einen Bildrahmen gemäß dem Benutzerbefehl erfasst;
eine Speichereinheit, die den von der Bildschirmerfassungseinheit erfassten Bildrahmen speichert;
eine Steuereinheit, die die Bildschirmerfassungseinheit steuert, um eine Vielzahl von Bildrahmen zu erfassen, die den Bildrahmen enthalten, der einem Zeitpunkt entspricht, zu dem der Benutzerbefehl eingegeben wird, und die Bildrahmen vor und nach diesem Bildrahmen enthalten;
eine Bildanalyseeinheit, die mindestens einen von der Benutzerschnittstelleneinheit ausgewählten Bildrahmen analysiert und die Bildinformation extrahiert, wobei
die Steuereinheit eine Steuerung vornimmt, um die Vielzahl von erfassten Bildrahmen auf einem Teil eines Anzeigebildschirms anzuzeigen und unter Verwendung der extrahierten Bildinformation eine Verbindung zu einem Dienst herzustellen,
wobei die Benutzerschnittstelleneinheit einen Benutzerbefehl empfängt, um den mindestens einen Bildrahmen aus der Vielzahl von angezeigten Bildrahmen auszuwählen.

2. Vorrichtung nach Anspruch 1, wobei die Vielzahl von Bildrahmen eine vorbestimmte Anzahl von Rahmen vor und nach dem Bildrahmen enthält, der dem Zeitpunkt entspricht, zu dem der Benutzerbefehl eingegeben wird.

3. Vorrichtung nach Anspruch 1 oder 2, ferner umfassend:
eine Dienstzuordnungseinheit, die einen verbindbaren Dienst gemäß Merkmalen der extrahierten Bildinformation sucht und eine Verbindung mit dem gesuchten verbindbaren Dienst herstellt.

4. Vorrichtung nach einem der vorhergehenden Ansprüche, wobei die Bildanalyseeinheit die Bildinformation unter Verwendung der optischen Zeichenerkennung (Optical Character Recognition, OCR) extrahiert.

5. Vorrichtung nach Anspruch 3 oder 4, wobei die Steuereinheit eine Steuerung vornimmt, um die extrahierte Bildinformation in Form eines Bildschirmanzeige (On-Screen Display, OSD)-Menüs anzuzeigen und eine Verbindung zu einem entsprechenden Dienst herzustellen, wenn das OSD-Menü gemäß einem Benutzerbefehl ausgewählt wird.

6. Vorrichtung nach einem der vorhergehenden Ansprüche, wobei die Steuereinheit eine Steuerung vornimmt, um das OSD-Menü an einer Stelle anzuzeigen, an der die Bildinformation in dem ausgewählten Bildrahmen angezeigt wurde.

7. Vorrichtung nach Anspruch 5, wobei der Dienst mindestens einen von einem Dienst der Bildverarbeitungsvorrichtung, einem Internet-Cloud-Dienst und einem Mobiltelefon-Bereitstellungsdienst umfasst.

8. Vorrichtung nach einem der vorhergehenden Ansprüche, wobei die Bildinformation mindestens eines der Folgenden enthält: eine Telefonnummer, eine Internetadresse, einen Websitenamen, einen Text, ein Datum, einen Ortsnamen, einen Produktnamen und den Namen einer Person.

9. Benutzerendgerätvorrichtung, umfassend:
eine Kommunikationsschnittstelleneinheit, die mit einer externen Bildverarbeitungsvorrichtung kommuniziert;
Mittel zum Eingeben eines Benutzerbefehls, um die Bildverarbeitungsvorrichtung zu veranlassen, einen Bildrahmen zu erfassen;
eine Anzeigeeinheit, die eine Vielzahl von erfassten Bildrahmen anzeigt, die von der Bildverarbeitungsvorrichtung empfangen werden;
eine Benutzerschnittstelleneinheit, die einen Benutzerbefehl empfängt, um den mindestens einen Bildrahmen aus der Vielzahl von angezeigten Bildrahmen auszuwählen; und
eine Steuereinheit, die die Kommunikationsschnittstelleneinheit steuert, um den Benutzerbefehl zum Auswählen des mindestens einen Bildrahmens an die Bildverarbeitungsvorrichtung zu übertragen;
wobei die Steuereinheit die Kommunikationsschnittstelleneinheit steuert, um einen Benutzerbefehl an die Bildverarbeitungsvorrichtung zu senden, um unter Verwendung der von der Bildverarbeitungsvorrichtung extrahierten Bildinformation eine Verbindung zu einem Dienst durch Analysieren des ausgewählten mindestens einen Bildrahmens herzustellen,
wobei die Vielzahl von Bildrahmen einen Bildrahmen, der einem Zeitpunkt entspricht, zu dem ein Benutzerbefehl zum Erfassen eines Bildes eingegeben wird, und eine vorgegebene Anzahl von Bildrahmen vor und nach dem Bildrahmen in der Bildverarbeitungsvorrichtung enthält.

10. Vorrichtung nach Anspruch 9, wobei die Steuereinheit die Kommunikationsschnittstelleneinheit steuert, um einen Benutzerbefehl zur Auswahl eines OSD-Menüs, das auf dem ausgewählten Bildrahmen angezeigt wird, an die Bildverarbeitungsvorrichtung zu übertragen,
wobei das OSD-Menü einem Dienst zugeordnet ist, der Merkmalen mindestens einer extrahierten Bildinformation entspricht, die durch Analysieren des ausgewählten Bildrahmens extrahiert wird.

11. Verfahren zur Verarbeitung eines Bildes mit einer Bildverarbeitungsvorrichtung, das Verfahren umfassend:
Anzeigen eines Bildsignals;
Empfangen eines Benutzerbefehls zum Erfassen eines Bildes;
Erfassen einer Vielzahl von Bildrahmen, die einen Bildrahmen enthalten, der einem Zeitpunkt entspricht, zu dem der Benutzerbefehl eingegeben wird, und Bildrahmen vor und nach dem Bildrahmen enthalten;
Speichern der Vielzahl von erfassten Bildrahmen;
Anzeigen der Vielzahl von erfassten Bildrahmen auf einem Teil eines Anzeigebildschirms; und
Empfangen eines Benutzerbefehls, um mindestens einen Bildrahmen aus der Vielzahl von angezeigten Bildrahmen auszuwählen,
Analysieren des ausgewählten mindestens einen Bildrahmens und Extrahieren der Bildinformation und Herstellen einer Verbindung mit einem Dienst unter Verwendung der extrahierten Bildinformation.

12. Verfahren nach Anspruch 11, wobei die Vielzahl von Bildrahmen eine vorbestimmte Anzahl von Rahmen vor und nach dem Bildrahmen enthält, der dem Zeitpunkt entspricht, zu dem der Benutzerbefehl eingegeben wird.

13. Verfahren zum Steuern einer Benutzerendgerätvorrichtung, die mit einer externen Bildverarbeitungsvorrichtung kommunizierbar ist, wobei das Verfahren Folgendes umfasst:
das Eingeben eines Benutzerbefehls in der Benutzerendgerätvorrichtung, um die Bildverarbeitungsvorrichtung zu veranlassen, einen Bildrahmen zu erfassen;
das Anzeigen einer Vielzahl von erfassten Bildrahmen auf der Benutzerendgerätvorrichtung, die von der Bildverarbeitungsvorrichtung empfangen werden;
das Empfangen eines Benutzerbefehls, um mindestens einen Bildrahmen aus der Vielzahl von angezeigten Bildrahmen auszuwählen;
das Übertragen des Benutzerbefehls zum Auswählen des mindestens einen Bildrahmens an die Bildverarbeitungsvorrichtung; und
das Übertragen eines Benutzerbefehls an die Bildverarbeitungsvorrichtung, um unter Verwendung einer von der Bildverarbeitungsvorrichtung extrahierten Bildinformation eine Verbindung zu einem Dienst durch Analysieren des ausgewählten mindestens einen Bildrahmens herzustellen,
wobei die Vielzahl von Bildrahmen einen Bildrahmen, der einem Zeitpunkt entspricht, zu dem ein Benutzerbefehl zum Erfassen eines Bildes eingegeben wird, und eine vorgegebene Anzahl von Rahmen vor und nach dem Bildrahmen in der Bildverarbeitungsvorrichtung enthält.

## Revendications

1. Appareil de traitement d'image, comprenant :
une unité de traitement d'image qui traite un signal d'image ;
une unité d'affichage qui affiche l'image traitée ;
une unité d'interface utilisateur qui reçoit une commande utilisateur pour capturer une image ;
une unité de capture d'écran qui capture une trame d'image en fonction de la commande utilisateur ;
une unité de stockage qui stocke la trame d'image capturée par l'unité de capture d'écran ;
une unité de commande qui commande à l'unité de capture d'écran de capturer une pluralité de trames d'image comportant la trame d'image correspondant à un point temporel où la commande utilisateur est entrée et comportant les trames d'image avant et après ladite trame d'image ;
une unité d'analyse d'image qui analyse au moins une trame d'image sélectionnée par l'unité d'interface utilisateur et extrait des informations d'image,
dans lequel l'unité de commande commande l'affichage de la pluralité de trames d'image capturées sur une partie d'un écran d'affichage et la connexion à un service au moyen des informations d'image extraites,
dans lequel l'unité d'interface utilisateur reçoit une commande utilisateur pour sélectionner l'au moins une trame d'image parmi la pluralité de trames d'image affichées.

2. Appareil selon la revendication 1, dans lequel la pluralité de trames d'image comportent un nombre prédéterminé de trames avant et après la trame d'image correspondant au point temporel où la commande utilisateur est entrée.

3. Appareil selon la revendication 1 ou 2, comprenant en outre :
une unité de mappage de service qui recherche un service connectable en fonction de caractéristiques des informations d'image extraites et se connecte au service connectable recherché.

4. Appareil selon une quelconque revendication précédente, dans lequel l'unité d'analyse d'image extrait les informations d'image en utilisant la reconnaissance optique de caractères (OCR).

5. Appareil selon la revendication 3 ou 4, dans lequel l'unité de commande commande l'affichage des informations d'image extraites sous la forme d'un menu d'affichage à l'écran (OSD) et la connexion à un service correspondant si le menu OSD est sélectionné en fonction d'une commande utilisateur.

6. Appareil selon une quelconque revendication précédente, dans lequel l'unité de commande commande l'affichage du menu OSD à un emplacement où les informations d'image étaient affichées dans la trame d'image sélectionnée.

7. Appareil selon la revendication 5, dans lequel le service en comporte au moins un parmi un service de l'appareil de traitement d'image, un service dans le nuage Internet et un service de téléphonie mobile.

8. Appareil selon une quelconque revendication précédente, dans lequel les informations d'image comportent au moins un élément parmi un numéro de téléphone, une adresse Internet, un nom de site Web, un texte, une date, un nom de lieu, un nom de produit, et un nom de personne.

9. Appareil terminal utilisateur, comprenant :
une unité d'interface de communication qui communique avec un appareil de traitement d'image externe ;
un moyen pour entrer une commande utilisateur pour conduire l'appareil de traitement d'image à capturer une trame d'image :
une unité d'affichage qui affiche une pluralité de trames d'image capturées reçues depuis l'appareil de traitement d'image ;
une unité d'interface utilisateur qui reçoit une commande utilisateur pour sélectionner au moins une trame d'image parmi la pluralité de trames d'image affichées ; et
une unité de commande qui commande à l'unité d'interface de communication de transmettre la commande utilisateur pour sélectionner l'au moins une trame d'image à l'appareil de traitement d'image,
dans lequel l'unité de commande commande à l'unité d'interface de communication de transmettre à l'appareil de traitement d'image une commande utilisateur pour se connecter à un service en utilisant les informations d'image extraites par l'appareil de traitement d'image par analyse de l'au moins une trame d'image sélectionnée ;
dans lequel la pluralité de trames d'image comporte une trame d'image correspondant à un point temporel où une commande utilisateur pour capturer une image est entrée et un nombre prédéterminé de trames d'image avant et après la trame d'image dans l'appareil de traitement d'image.

10. Appareil selon la revendication 9, dans lequel l'unité de commande commande à l'unité d'interface de communication de transmettre une commande utilisateur pour sélectionner un menu OSD affiché sur la trame d'image sélectionnée à l'appareil de traitement d'image,
dans lequel le menu OSD est mappé avec un service correspondant à des caractéristiques d'au moins une information d'image extraite qui est extraite par analyse de la trame d'image sélectionnée.

11. Procédé de traitement d'une image avec un appareil de traitement d'image, le procédé comprenant :
l'affichage d'un signal d'image ;
la réception d'une commande utilisateur pour capturer une image ;
la capture d'une pluralité de trames d'image comportant une trame d'image correspondant à un point temporel où la commande utilisateur est entrée, et comportant des trames d'image avant et après ladite trame d'image ;
le stockage de la pluralité de trames d'image capturées ;
l'affichage de la pluralité de trames d'image capturées sur une partie d'un écran d'affichage ; et
la réception d'une commande utilisateur pour sélectionner au moins une trame d'image parmi la pluralité de trames d'image affichées,
l'analyse de l'au moins une trame d'image sélectionnée et l'extraction d'informations d'image, et la connexion à un service au moyen des informations d'image extraites.

12. Procédé selon la revendication 11, dans lequel la pluralité de trames d'image comportent un nombre prédéterminé de trames avant et après la trame d'image correspondant au point temporel où la commande utilisateur est entrée.

13. Procédé de commande d'un appareil terminal utilisateur pouvant communiquer avec un appareil de traitement d'image externe, le procédé comprenant l'entrée au niveau du terminal utilisateur d'une commande utilisateur pour conduire l'appareil de traitement d'image à capturer une trame d'image ;
l'affichage au niveau de l'appareil terminal utilisateur d'une pluralité de trames d'image capturées reçues depuis l'appareil de traitement d'image ;
la réception d'une commande utilisateur pour sélectionner au moins une trame d'image parmi la pluralité de trames d'image affichées ;
la transmission de la commande utilisateur pour sélectionner l'au moins une trame d'image à l'appareil de traitement d'image ; et
la transmission d'une commande utilisateur à l'appareil de traitement d'image pour se connecter à un service en utilisant une information d'image extraite par l'appareil de traitement d'image par analyse de l'au moins une trame d'image sélectionnée,
dans lequel la pluralité de trames d'image comportent une trame d'image correspondant à un point temporel où une commande utilisateur pour capturer une image est entrée et un nombre prédéterminé de trames avant et après la trame d'image dans l'appareil de traitement d'image.
